# FASCICULE DE BREVET EUROPEEN

(11) **EP 1 751 334 B1**
(45) Date de publication et mention de la délivrance du brevet: **20.08.2008**
(21) Numéro de dépôt: 05739374.6
(22) Date de dépôt: 09.03.2005
(51) Int. Cl.: D01H 1/32

(54) **DISPOSITIF DE GESTION D'UNE COUPURE D'ALIMENTATION ELECTRIQUE DANS UNE MACHINE TEXTILE NOTAMMENT DE TRANSFORMATIONS DE FILS**
BEI STROMAUSFALL TÄTIGE EINRICHTUNG IN EINER INSBESONDERE DER GARNUMWANDLUNG DIENENDEN TEXTILMASCHINE
DEVICE FOR MANAGING AN ELECTRICAL POWER CUTOFF IN AN, IN PARTICULAR, YARN TRANSFORMATION TEXTILE MACHINE

(30) Priorité: 22.03.2004 FR 0450559
(43) Date de publication de la demande: 14.02.2007
(73) Titulaire: RITM, 26014 Valence Cedex (FR)
(72) Inventeur: POTHIER, Philippe, F-26800 ETOILE SUR RHONE (FR)
(74) Mandataire: Thivillier, Patrick
(86) Numéro de dépôt international: PCT/FR2005/050151
(87) Numéro de publication internationale: WO 2005/093141

(56) Documents cités:
- DE-A- 3 910 183
- DE-A- 19 821 251
- US-A- 5 113 123
- US-A- 6 023 152

## Description

L'invention se rattache au domaine technique des machines textiles notamment de transformation du fil.

Plus particulièrement, l'invention concerne la gestion des phases transitoires, notamment d'arrêt en cas de coupure de courant des machines de transformation de fils textiles en mouvement.

L'invention trouve une application particulièrement avantageuse dans le cas où les machines textiles présentent, d'une part, des moyens permettant de faire avancer les fils tels que des cylindres coopérant avec des galets presseurs, cabestans, guides fils ou autres et, d'autre part, des moyens de traitement des fils basés sur le principe d'une rotation conférant auxdits fils, par exemple un effet de torsion sur eux-mêmes ou un enroulement des fils les uns sur les autres.

Quelles que soient les solutions techniques utilisées, il apparaît, d'une manière parfaitement connue pour un homme du métier, que les transformations de fils sont caractérisées par des rapports de vitesses entre les organes destinés à faire avancer le fil et ceux destinés à produire la torsion ou autre. Par exemple, dans le cas d'un retordage dit simple torsion qui consiste à dévider un fil depuis une bobine mise en rotation sur un elle-même, le fil subit une torsion sur lui-même par retour de rotation de la bobine en passant du support en rotation au support fixe. Si le fil est dévidé à une vitesse V (exprimée en m/mn), cette bobine tourne sur elle-même à une vitesse de rotation N (exprimée en T/mn), le fil ainsi traité subit une torsion T = N/V exprimée en T/m.

Dans le cas d'un retordage dit double torsion qui consiste à dévider un fil d'une bobine fixe et à le faire passer dans une broche tournante dont l'axe creux est placé au centre de la bobine puis à la faire tourner autour de ladite bobine fixe, le fil subit, en passant du support fixe à l'axe rotatif, une torsion sur lui-même puis, en passant de l'axe rotatif au support fixe, une deuxième torsion sur lui-même qui s'ajoute à la première. Dans ce cas, si le fil est dévidé à une vitesse V (exprimée en m/mn) et que la broche tourne sur elle-même à une vitesse de rotation N exprimée en T/mn, le fil ainsi traité subit une torsion T = 2N/V exprimée en T/m.

Ces moyens de retordage (torsion, câblage, guipage, ...) sont généralement complétés par des organes destinés à faire avancer les fils en les entraînant avec ou sans glissement. Les vitesses relatives de ces différents organes permettent de contrôler des tensions dans les fils, de créer des étirages ou, au contraire, une relaxation.

Chaque organe peut être piloté par des motorisations collectives ou individuelles, par exemple des moteurs synchrones pilotés par des variateurs de fréquence ou convertisseurs. La synchronisation entre les organes et donc les rapports de vitesse, est assurée par des systèmes de régulation de vitesses électroniques ou par des systèmes asservis contrôlés par un automate.

Compte tenu de cet état de la technique, il apparaît que les machines textiles de transformation du fil notamment, nécessitent des moyens permettant une gestion parfaitement contrôlée des rapports de vitesses entre les mouvements. Un tel contrôle doit être maintenu dans les phases de démarrage et d'arrêt, notamment lors d'une phase transitoire consécutive à une coupure d'alimentation électrique. En effet, un cycle de production pouvant atteindre plusieurs dizaines d'heures, il est apparu qu'un fonctionnement temporaire ou un arrêt incontrôlé peut conduire à une perte très importante de production.

Différentes solutions techniques ont été proposées pour assurer le maintien et/ou la récupération d'énergie afin de permettre d'assurer un arrêt contrôlé des positions de travail en cas d'une coupure d'alimentation électrique.

Par exemple, on a proposé d'utiliser une source d'énergie auxiliaire sous forme d'un système de batteries pour fournir temporairement l'énergie nécessaire. Il apparaît toutefois que ces systèmes par batteries sont très coûteux à l'achat (énergie importante à stocker), à l'entretien (remplacement fréquent pour assurer une fiabilité correcte) et nécessitent des moyens de gestion complexes pour la recharge des batteries.

Dans des domaines techniques autres que le textile, on a proposé des dispositifs de sauvegarde auxiliaires basés sur des systèmes inertiels consistant à entraîner en rotation, au moyen d'un moteur électrique, un volant d'inertie de masse importante. En cas de coupure de courant, le moteur est utilisé en générateur, en récupérant l'énergie du volant d'inertie. Une telle solution ressort par exemple de l'enseignement du brevet US 6.023.152. Comme précédemment, cette solution est coûteuse à l'achat compte tenu de l'énergie importante à stocker, et à l'entretien.

On a proposé également de récupérer l'énergie cinétique des organes tournants à haute vitesse et/ou ayant un fort moment d'inertie, tels que les broches de torsion par exemple et plus généralement tout organe appartenant à la machine. Cette énergie est utilisée pour assurer l'alimentation du moteur d'entraînement des organes qui font avancer le fil afin de maintenir un taux de torsion constant. L'énergie cinétique est récupérée en imposant, après détection de la coupure, une décélération suffisante pour faire fonctionner les moteurs des broches en générateur et réinjecter le courant sur le circuit d'alimentation commun tel que, par exemple, un bus en courant continu. L'excédent d'énergie peut être, soit partagé avec d'autres équipements par couplage des bus courant continu, soit dissipé dans des résistances de freinage par exemple.

On a proposé, comme cela ressort par exemple du brevet US 5.113.123, de récupérer cette énergie cinétique sur les organes tournants en combinaison avec une alimentation auxiliaire par batterie, de sorte qu'une partie de l'énergie provient de la récupération de l'énergie cinétique, tandis que l'autre provient des batteries.

Généralement, les systèmes par récupération d'énergie cinétique des broches, fonctionnent avec un organe de pilotage, sous forme par exemple d'un variateur de fréquence qui alimente un ensemble de broches, ou avec un variateur de fréquence individuel pour chacune des motobroches. Généralement, le ou les variateurs de motobroches sont assujettis à un bus continu qui alimente également des variateurs pilotant les organes liés à l'avancement du fil. En cas de coupure de l'alimentation électrique, le système détecte une chute de tension du bus continu, de sorte que le ou les variateurs de fréquence basculent en mode de récupération d'énergie et maintiennent la tension dans le bus continu en récupérant l'énergie cinétique accumulée dans les motobroches, ce qui s'effectue en imposant une décélération. Un dispositif de gestion d'une coupure d'alimentation électrique selon le préambule de la revendication 1, est devalgué par le document DE-A-39.10.183

Dans le cas d'usage de moteur asynchrone et même dans le cas où il y a un variateur de fréquence individuel pour chacune des motobroches, chacune d'elles décélère selon sa propre courbe qui est fonction de la dispersion des couples résistants. La consigne de décélération peut éventuellement être imposée, de sorte qu'il est, en théorie, possible de la réguler pour maintenir la tension du bus continu. Par contre, il n'est pas possible de garantir un synchronisme correct étant donné que l'on ne connaît pas le glissement du moteur qui est variable d'une position à l'autre.

Avec cette solution il n'est pas possible d'imposer une décélération identique et synchrone à chaque broche.

Il résulte de cet exposé de l'état antérieur de la technique que l'énergie disponible au moment de la coupure de courant, est fortement liée aux conditions de fonctionnement initial de la machine, notamment au nombre de broches en service et à la vitesse nominale de ces dernières et à leur moment d'inertie. De tels paramètres sont très variables étant donné qu'une machine peut fonctionner avec un nombre partiel ou limité de broches ou à des vitesses de broche relativement faibles. Or l'énergie nécessaire aux autres mouvements, est peu sensible à ces paramètres, de sorte que le profil de ralentissement permettant de récupérer l'énergie nécessaire à ces autres mouvements va dépendre fortement des conditions de fonctionnement initial. Pour obtenir une telle énergie, il faut, par exemple, imposer une décélération d'autant plus forte que le nombre de broches est faible.

L'invention s'est fixée pour but de remédier à ces inconvénients, de manière simple, sûre, efficace et rationnelle.

Le problème que se propose de résoudre l'invention est d'obtenir un synchronisme entre les différents mouvements notamment d'avancement du fil et ceux conférant la torsion par exemple, parfaitement contrôlé et constant pendant la coupure d'alimentation électrique, cela avec un système offrant une grande fiabilité à un coût raisonnable.

Compte tenu du problème posé à résoudre, il a été conçu et mis au point un dispositif de gestion d'une coupure d'alimentation électrique qui trouve une application particulièrement avantageuse dans le cas d'une machine textile notamment de transformation de fils comprenant :
- des moyens pour faire avancer les fils assujettis à des organes moteur pilotés par des convertisseurs ou variateurs de fréquence alimentés par un bus continu commun ;
- un système de contrôle/commande (par exemple un automate) alimenté par le même bus continu ;
- des moyens de traitement des fils sous forme de motobroches notamment, assujetties à des organes moteur individuels pilotés par des convertisseurs ou variateurs de fréquence.

Compte tenu du problème posé à résoudre, selon l'invention, le dispositif comprend :
- un volant d'inertie assujetti à un organe moteur piloté par un convertisseur ou variateur de fréquence couplé au bus continu;
- des convertisseurs ou variateurs de motobroche incluant chacun des moyens d'arrêt autonomes en cas de coupure de l'alimentation générale, aptes à enclencher une décélération sur une rampe interne préprogrammée ;
- des moyens de surveillance de la tension d'alimentation générale apte à ordonner à tous lesdits variateurs (de motobroche et de pilotage des organes d'avancement du fil) de commuter en mode d'arrêt, en cas de coupure de courant, de sorte que :
   * chaque variateur freine la motobroche qui lui est associée selon la rampe de décélération préprogrammée et s'auto-alimente par l'énergie cinétique de ladite motobroche ;
   * le variateur pilotant l'organe moteur du volant d'inertie impose une décélération qui place ledit moteur en mode générateur pour alimenter le niveau du bus continu commun ;
   * le système de contrôle applique auxdits variateurs pilotant les organes d'avancement du fil, une rampe de décélération prédéterminée établie par rapport à la rampe de décélération préprogrammée dans le ou les variateurs de broche, pour maintenir des rapports de vitesse corrects.

Dans une variante de l'invention, les rampes de décélération prédéterminées, peuvent être programmées dans les variateurs pilotant les organes d'avancement du fil.

Compte tenu de ces dispositions, il en résulte qu'en cas de coupure d'alimentation, une surveillance de la tension d'alimentation ordonne au dispositif de basculer en mode récupération d'énergie. Les variateurs des motobroches freinent de façon autonome les broches suivant une pente prédéterminée en évacuant l'énergie excédentaire, tandis que les variateurs pilotant les organes d'avancement du fil, appliquent une pente de décélération qui accompagne précisément les broches. Le volant d'inertie, associé à son variateur, permet, pendant la durée de l'arrêt, d'alimenter en énergie les moyens de contrôle de commande et les convertisseurs ou variateurs qui maintiennent le niveau de son bus continu.

Il en résulte un arrêt identique d'une position à l'autre créant une réserve énergétique permanente pour un faible coût en matériel, en consommation et en maintenance.

Selon d'autres caractéristiques, les rampes préprogrammées dans les variateurs individuels des broches et celles programmées dans le système de contrôle, sont déterminées de sorte que, lorsque le cycle d'arrêt est déclenché simultanément, les vitesses restent sensiblement proportionnelles pendant toute la durée de l'arrêt.

La masse du volant d'inertie et sa vitesse sont déterminées pour que ledit volant contienne suffisamment d'énergie pour maintenir l'alimentation des moyens de faire avancer les fils pendant toute la durée de l'arrêt.

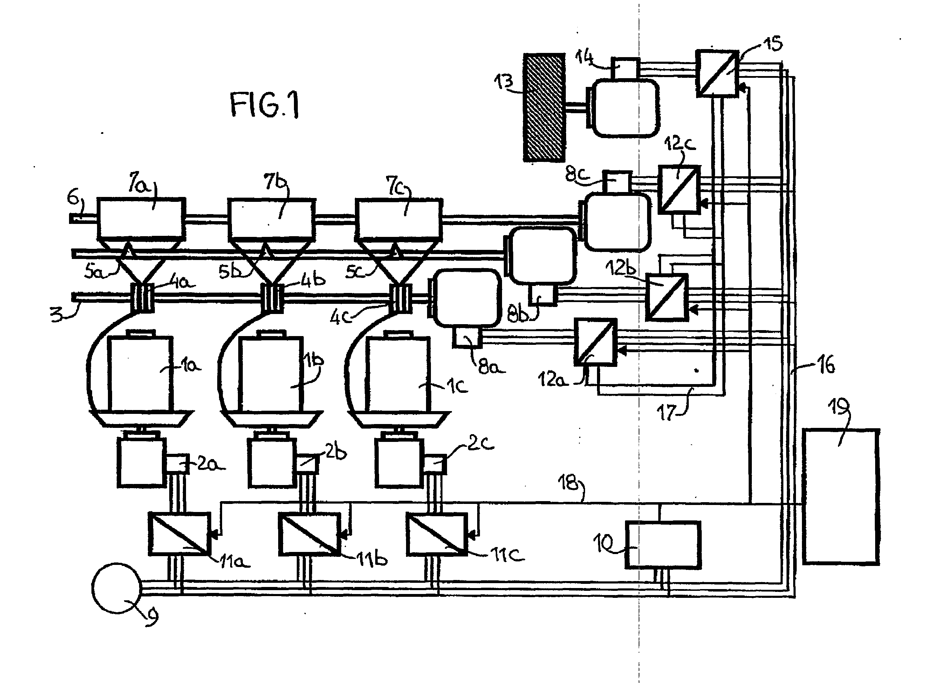

L'invention est exposée ci-après plus en détail à l'aide de la figure 1 du dessin annexé qui montre, par une vue à caractère schématique, le dispositif de gestion et de contrôle dans une machine textile de transformation des fils. Ce schéma et la configuration de la machine sont donnés à titre d'exemple non limitatif.

Des broches de torsion (1a), (1b), (1c) sont entraînées chacune par un moteur de commande individuel (2a), (2b), (2c). Vis à vis de chacune des broches (1a), (1b), (1c) sont disposés des organes délivreurs (4a), (4b), (4c) montés sur un arbre commun (3) entraîné par un moteur (8a).

A chaque position, est associé un guide-fil (5a, 5b, 5c) effectuant un mouvement de va et vient motorisé par un moteur (8b).

En relation avec les guide-fil (5a), (5b), (5c), sont montés des cylindres d'appel (7a), (7b), (7c) portés par un arbre (6) entraîné par un moteur (8c). Les moteurs (8a), (8b) et (8c) sont pilotés par des convertisseurs ou variateurs de fréquence (12a), (12b) et (12c).

Les variateurs (12a), (12b) et (12c), ainsi qu'un système de contrôle (19), sous forme d'un automate par exemple, sont alimentés par un bus continu commun (17). Sur ce bus (17), est également connecté un variateur de fréquence (15) alimentant un moteur (14) couplé à un volant d'inertie (13).

Les moteurs d'entraînement individuels (2a), (2b), (2c) des broches de torsion (1a), (1b), (1c) sont également pilotés chacun par un variateur convertisseur de fréquence (11a), (11b), (11c). Chaque variateur de fréquence (11a), (11b), (11c) est équipé de moyens individuels d'asservir la vitesse du moteur à une consigne et d'un mode d'arrêt individuel sur coupure de courant. Ce mode d'arrêt enclenche une décélération sur une rampe interne préprogrammée. Cette rampe interne est déterminée pour placer le moteur en mode générateur, de sorte qu'il renvoie au variateur une énergie égale ou supérieure à celle absorbée par les circuits de commande. L'énergie excédentaire éventuelle est dissipée sur une résistance de freinage intégrée dans chaque variateur (11a), (11b), (11c).

Les différents variateurs de pilotage (11a), (11b), (11c) et (12a), (12b), (12c) et (15) sont reliés électriquement à l'alimentation générale désignée par (9) par un réseau triphasé (16).

En cas de coupure d'alimentation correspondant au passage de la tension sous un seuil prédéterminé, les moyens (10) de surveillance de la tension d'alimentation ordonnent, par une commande transitant par exemple sur un bus de données (18), à tous les variateurs de basculer en mode d'arrêt sur coupure de courant.

Il en résulte la séquence suivante :
- D'une part, les variateurs (2a), (2b), (2c) des motobroches (1a), (1b), (1c) basculent en mode d'arrêt sur coupure de courant ; chacun d'eux freine sa broche selon la pente de décélération prédéterminée, en évacuant l'énergie excédentaire sur sa résistance de freinage.
- D'autre part, le variateur (15) pilotant le volant d'inertie (13) impose une décélération qui place le moteur (14) en mode générateur pour alimenter le niveau du bus continu (17). Eventuellement, la décélération est recalculée en permanence pour maintenir constante la tension du bus d'alimentation (17) sur lequel sont connectés le système de contrôle (automate) et les variateurs (12a) et (12b) pilotant les organes d'avancement du fil (4a-5a-7a), (4b-5b-7b), (4c-5c-7c).
- Enfin, le système de contrôle (19) applique aux variateurs (11a, 11b, 11c) une pente de décélération prédéterminée, laquelle pente est établie par rapport à la courbe prédéterminée programmée dans lesdits variateurs pour maintenir des rapports de vitesses conformes aux exigences du process.

Les pentes préprogrammées dans les variateurs individuels des broches (11a, 11b, 11c) et celles programmées dans le système de contrôle (19) des moyens de faire avancer les fils, sont telles que lorsque le cycle d'arrêt est déclenché simultanément les vitesses restent dans un rapport correct pendant toute la durée de l'arrêt.

La masse et la vitesse initiale du volant d'inertie (13) sont déterminées pour qu'ils contiennent suffisamment d'énergie pour maintenir l'alimentation des moyens de contrôler le système et de faire avancer le fils pendant toute la durée de l'arrêt.

Lorsque la coupure de courant cesse pendant le cycle d'arrêt, le dispositif de surveillance (10) compare soit la durée de la coupure, soit une vitesse (par exemple celle des broches), à un seuil programmable prédéterminé.

Si la durée est inférieure à ce seuil ou si la vitesse est supérieure à ce seuil, l'ordre de basculement sur le mode de récupération est interrompu.
- Les variateurs (11a), (11b), (11c) des motobroches (2a), (2b), (2c) réaccélèrent sur une pente préprogrammée jusqu'à la vitesse normale.
- Le variateur (15), pilotant le volant d'inertie (13), re-accélère de même selon une rampe prédéterminée jusqu'à sa vitesse nominale.
- Enfin, le système de contrôle applique aux réceptions une pente d'accélération prédéterminée qui est proportionnelle à la courbe prédéterminée programmée dans les variateurs de broche.

Si la durée de l'arrêt est supérieure à ce seuil ou si la vitesse en fin de coupure est inférieure à ce seuil, alors le cycle d'arrêt est poursuivi jusqu'à l'arrêt complet en maintenant les synchronismes.

Le dispositif selon l'invention conduit donc en toutes circonstances à maintenir le synchronisme et les rapports de vitesses corrects entre les mouvements. En cas d'arrêt, la décélération est identique d'une position à l'autre, puisque chaque broche est pilotée par son propre variateur, qui conserve les moyens de respecter une rampe de décélération identique jusqu'à l'arrêt complet.

Le volant d'inertie permet de disposer d'une réserve énergétique permanente, uniquement dédiée à fournir l'énergie nécessaire au pilotage et à la motorisation des moyens d'avancement du fil. Le dispositif est donc de taille et de coût raisonnable en matériel (variateur, moteur et volant), en consommation (consommation pour maintenir le volant en rotation) et en maintenance (durée de vie connue et fiabilité).

Les avantages ressortent bien de la description, en particulier on souligne et on rappelle :
- les broches ne sont pas alimentées par le bus commun mais auto-alimentées et autonomes ;
- l'ensemble des éléments d'avancement des fils sont sur un bus commun qui est maintenu alimenté par le volant d'inertie, de sorte que les deux systèmes sont totalement indépendants énergiquement (seule la valeur des rampes de l'un et l'autre évite tout défaut de tension).

## Revendications

1. Dispositif de gestion d'une coupure d'alimentation électrique dans une machine textile notamment de transformation de fils comprenant :
- des moyens pour faire avancer les fils assujettis à des organes moteur pilotés par des convertisseurs ou variateurs de fréquence (12a), (12b) alimentés par un bus continu commun (17) ;
- un système de contrôle/commande (19) alimenté par le même bus continu;
- des moyens de traitement des fils sous forme de motobroches (1a), (1b), (1c) notamment, assujetties à des organes moteur individuels pilotés par des convertisseurs ou variateurs de fréquence (11a), (11b), (11c),
**caractérisé en ce que:**
- les motobroches (1a), (1b), (1c) ne sont pas alimentées par le bus commun mais auto-alimentées et autonomes ;
- le bus commun (17) de l'ensemble des éléments d'avancement des fils, est maintenu alimenté par un volant d'inertie (13), de sorte que les deux systèmes sont totalement indépendants énergiquement, seule la valeur des rampes de l'un et l'autre évite tout défaut de tension.

2. Dispositif selon la revendication 1, **caractérisé en ce que :**
- le volant d'inertie (13) est assujetti à un organe moteur (14) piloté par un convertisseur ou variateur de fréquence (15) couplé au bus continu commun (17) ;
- les convertisseurs ou variateurs (11a), (11b), (11c) des motobroches incluent des moyens d'arrêts autonomes en cas de coupure de l'alimentation générale, aptes à enclencher une décélération sur une rampe interne préprogrammée ;
- des moyens de surveillance de la tension d'alimentation générale (9) sont aptes à ordonner à tous lesdits variateurs (11a), (11b), (11c) de motobroche et (12a), (12b), (12c) des organes d'avancement du fil, de commuter en mode d'arrêt, en cas de coupure de courant, de sorte que :
* chaque variateur (11a), (11b), (11c) freine la motobroche selon la rampe de décélération préprogrammée et s'auto-alimente par l'énergie cinétique de ladite motobroche ;
* le variateur (15) pilotant l'organe moteur (14) du volant d'inertie (13) impose une décélération qui place ledit moteur en mode générateur pour alimenter le niveau du bus continu commun (17) ;
* le système de contrôle (19) applique auxdits variateurs une rampe de décélération prédéterminée établie par rapport à la rampe de décélération programmée, pour maintenir des rapports de vitesse corrects.

3. Dispositif selon l'une quelconque des revendications 1 et 2, **caractérisé en ce que** les rampes préprogrammées dans les variateurs individuels (11a), (11b), (11c) des broches et celle programmée dans le système de contrôle, sont déterminées de sorte que, lorsque le cycle d'arrêt est déclenché simultanément, les vitesses restent sensiblement proportionnelles pendant toute la durée de l'arrêt.

4. Dispositif selon l'une quelconque des revendications 1 et 2, **caractérisé en ce que** la masse du volant d'inertie (13) et sa vitesse sont déterminées pour que ledit volant contienne suffisamment d'énergie pour maintenir l'alimentation des moyens de faire avancer les fils pendant toute la durée de l'arrêt.

5. Dispositif selon la revendication 2, **caractérisé en ce que** les rampes de décélération prédéterminées sont programmées dans les variateurs pilotant les organes d'avancement du fil.

## Claims

1. Device for managing an electric power cutoff in a textile machine, in particular for yarn processing, comprising:
- means for advancing the yarns subject to drive members controlled by frequency converters or variators (12a), (12b) supplied by a continuous D.C. busbar (17);
- a monitoring/control system (19) supplied by the same D.C. busbar.
- means for treating the yarns in the form of motor-driven spindles (1a), (1b), (1c) in particular, subject to individual drive members controlled by frequency converters or variators (11a), (11b), (11c).
**characterized in that:**
- the motor-driven spindles (1a), (1b), (1c) are not supplied by the common busbar but are self-supplied and autonomous;
- the common busbar (17) of all the yarn advance elements is kept supplied by a flywheel (13), so that the two systems are energetically completely independent, and only the value of the ramps of one and the other avoids any voltage failure.

2. Device according to Claim 1, **characterized in that:**
- the flywheel (13) is subject to a drive member (14) controlled by a frequency converter or variator (15) coupled to the common D.C. busbar (17);
- the converters or variators (11a), (11b), (11c) of the motor-driven spindles include self-contained stopping means in case of mains failure, suitable for initiating a deceleration on a preprogrammed internal ramp;
- means for monitoring the general power supply voltage (9) are suitable for ordering all the said variators (11a), (11b), (11c) of the motor-driven spindles and (12a), (12b), (12c) of the yarn advance members, to switch to stop mode, in case of mains failure, so that:
* each variator (11a), (11b), (11c) brakes the motor-driven spindle according to the preprogrammed deceleration ramp and is self-supplied by the kinetic energy of the said motor-driven spindle;
* the variator (15) controlling the drive member (14) of the flywheel (13) imposes a deceleration which places the said motor in generator mode to supply the level of the common D.C. busbar (17);
* the control system (19) applies a predefined deceleration ramp to the said variators, established with regard to the programmed deceleration ramp, to maintain correct speed ratios.

3. Device according to either of Claims 1 and 2, **characterized in that** the preprogrammed ramps in the individual variators (11a), (11b), (11c) of the spindles and the preprogrammed ramp in the monitoring system, are defined so that, when the stopping cycle is initiated simultaneously, the speeds remain substantially proportional throughout the duration of the stoppage.

4. Device according to either of Claims 1 and 2, **characterized in that** the mass of the flywheel (13) and its speed are defined so that the said flywheel contains sufficient energy to maintain the supply of the yarn advance means throughout the duration of the stoppage.

5. Device according to Claim 2, **characterized in that** the predetermined deceleration ramps are programmed in the variators controlling the yarn advance members.

## Patentansprüche

1. Vorrichtung zur Steuerung einer Stromunterbrechung in einer Textilmaschine, insbesondere zur Garnverarbeitung, umfassend:
- Mittel, um die Gespinste, die Antriebsorganen unterworfen sind, die durch Wandler oder Frequenzvariatoren (12a), (12b) fremdgeführt sind, die durch einen gemeinsamen kontinuierlichen Bus (17) gespeist sind, fortzubewegen;
- ein Kontroll/Steuersystem (19), das durch denselben kontinuierlichen Bus gespeist ist;
- Garnverarbeitungsmittel in Form von Motorspindeln (1a), (1b), (1c), insbesondere, die individuellen Antriebsorganen unterworfen sind, die durch Wandler oder Frequenzvariatoren (11a), (11b), (11c) fremdgeführt sind,
**dadurch gekennzeichnet, dass:**
- die Motorspindeln (1a), (1b), (1c) nicht durch den gemeinsamen Bus gespeist, aber selbstspeisend und autonom sind;
- der gemeinsame Bus (17) der Einheit der Elemente zur Fortbewegung der Gespinste durch ein Schwungrad (13) gespeist gehalten wird, derart, dass die beiden Systeme energetisch völlig unabhängig sind, lediglich der Wert der Rampe des einen und des anderen vermeidet einen jeglichen Spannungsfehler.

2. Vorrichtung nach Anspruch 1, **dadurch gekennzeichnet, dass:**
- das Schwungrad (13) einem Antriebsorgan (14) unterworfen ist, das durch einen Wandler oder einen Frequenzvariator (15) fremdgeführt ist, der an den gemeinsamen kontinuierlichen Bus (17) gekoppelt ist;
- die Wandler oder Variatoren (11a), (11b), (11c) der Motorspindeln autonome Stoppmittel im Fall einer allgemeinen Speiseunterbrechung einschließen, die in der Lage sind, eine Verzögerung auf einer vorprogrammierten internen Rampe zu sperren;
- Mittel (9) zur Überwachung der allgemeinen Speisespannung in der Lage sind, allen Motorspindel-Variatoren (11a), (11b), (11c) und Organen (12a), (12b), (12c) zum Fortbewegen des Garns zu befehlen, im Stopp-Modus im Fall einer Stromunterbrechung umzuschalten, derart dass:
* ein jeder Variator (11a), (11b), (11c) die Motorspindel gemäß der vorprogrammierten Verzögerungsrampe bremst und sich durch die kinetische Energie der Motorspindel selbstspeist;
* der Variator (15), der das Antriebsorgan (14) des Schwungrads (13) fremdführt, eine Verzögerung auferlegt, die den Motor in den Generator-Modus versetzt, um das Niveau des gemeinsamen kontinuierlichen Busses (17) zu speisen;
* das Kontrollsystem (19) den Variatoren eine vorbestimmte Verzögerungsrampe aufdrückt, die bezogen auf die programmierte Verzögerungsrampe festgesetzt ist, um korrekte Übersetzungsverhältnisse aufrechtzuerhalten.

3. Vorrichtung nach Anspruch 1 oder 2, **dadurch gekennzeichnet, dass** die vorprogrammierten Rampen in den individuellen Variatoren (11a), (11b), (11c) der Spindeln und diejenigen, die im Kontrollsystem programmiert sind, derart bestimmt sind, dass, wenn der Stopp-Zyklus gleichzeitig ausgelöst ist, die Geschwindigkeiten im Wesentlichen während der gesamten Dauer des Stopps proportional bleiben.

4. Vorrichtung nach Anspruch 1 oder 2, **dadurch gekennzeichnet, dass** die Masse des Schwungrads (13) und seine Geschwindigkeit bestimmt sind, damit das Schwungrad ausreichend Energie enthält, um die Speisung der Mittel zum Fortbewegen der Gespinste während der gesamten Dauer des Stopps aufrechtzuerhalten.

5. Vorrichtung nach Anspruch 2,
**dadurch gekennzeichnet, dass** die vorbestimmten Verzögerungsrampen in den Variatoren programmiert sind, die die Organe zum Fortbewegen des Garns fremdführen.
